# EUROPÄISCHE PATENTSCHRIFT

(11) **EP 3 984 810 B1**
(45) Veröffentlichungstag und Bekanntmachung des Hinweises auf die Patenterteilung: **16.07.2025**
(21) Anmeldenummer: 21197390.4
(22) Anmeldetag: 17.09.2021
(51) Int. Cl.: B60L 53/66, B60L 53/68, B60L 53/65, B60L 53/14, B60L 53/31, H02J 7/00, H04B 3/54, H04W 12/06, B60L 53/30

(54) **VERFAHREN ZUR AUTHENTIFIZIERUNG UND FREIGABE EINES LADEVORGANGES EINES ELEKTRO- ODER HYBRIDFAHRZEUGS AN EINER LADESÄULE, LADESÄULE UND ELEKTRO- ODER HYBRIDFAHRZEUG**
METHOD FOR AUTHENTICATING AND RELEASING A CHARGING PROCESS OF AN ELECTRIC OR HYBRID VEHICLE AT A CHARGING COLUMN, CHARGING COLUMN AND ELECTRIC OR HYBRID VEHICLE
PROCÉDÉ D'AUTHENTIFICATION ET D'AUTORISATION D'UN PROCÉDÉ DE CHARGE D'UN VÉHICULE ÉLECTRIQUE OU HYBRIDE SUR UN CHARGEUR À POSTE FIXE, CHARGEUR À POSTE FIXE ET VÉHICULE ÉLECTRIQUE OU HYBRIDE

(30) Priorität: 15.10.2020 DE 102020213061
(43) Veröffentlichungstag der Anmeldung: 20.04.2022
(73) Patentinhaber: VOLKSWAGEN AG, 38440 Wolfsburg (DE)
(72) Erfinder: Gerlach, Dr. Simon, 38553 Wasbüttel (DE)

(56) Entgegenhaltungen:
- EP-A1- 2 819 263
- DE-A1- 102009 033 051
- DE-A1- 102015 107 395
- DE-A1- 102017 206 948
- JP-A- 2009 165 301
- US-A1- 2010 274 570
- US-A1- 2012 150 360
- US-A1- 2014 074 308
- US-A1- 2015 123 619
- US-A1- 2016 084 672

## Beschreibung

Die Erfindung betrifft ein Verfahren zur Authentifizierung und Freigabe eines Ladevorganges eines Elektro- oder Hybridfahrzeuges an einer Ladesäule, eine Ladesäule und ein Elektro- oder Hybridfahrzeug.

Insbesondere bei privaten Ladesäulen stellt sich das Problem, diese einerseits gegen Missbrauch zu schützen und andererseits den Ladevorgang so unkompliziert wie möglich zu gestalten. Sind die Ladesäulen dauerbestromt, existiert kein Schutz gegen Missbrauch. Sind hingegen die Authentifizierungen zu kompliziert, ist dies für den berechtigten Nutzer lästig.

Aus der DE 10 2010 000 280 A1 ist ein Managementsystem zum Aufladen eines anschließbaren Fahrzeugs bekannt, mit einem Kommunikationsmodul, das zum Ausführen des Sperrens und Freigebens einer Türverriegelung in dem anschließbaren Fahrzeug Identifikationsinformationen von einem Schlüssel mit elektrischer Zertifikation abruft. Weiter weist das System ein Sicherheitsmodul auf, das ein Verifikationsmodul zum Verifizieren aufweist, ob basierend auf der Identifikationsinformation, die durch das Kommunikationsmodul abgerufen worden ist, ein ordnungsgemäßer Schlüssel vorliegt oder nicht. Das Sicherheitsmodul lässt dann einen Aufladevorgang für das anschließbare Fahrzeug zu, wenn ein ordnungsgemäßer Schlüssel erfasst wird. Nachteilig ist, dass bei modernen Kraftfahrzeugen nicht immer ein Fahrzeugschlüssel vorhanden ist.

Aus der DE 10 2009 035 627 A1 ist eine ein- und ausschaltbare Lade-Steckdose zur Aufladung eines Elektroautos bekannt, mit einem Schaltglied, welches zwischen Eingangs-Anschlussklemmen und einem mit einem aufzuladenden Fahrzeug zu verbindenden Ausgangs-Anschluss eingebunden ist, dessen Steuereingang mit einer Ansteuer-Baukomponente zum Ein- oder Ausschalten der Lade-Steckdose verbunden ist, wobei die Ansteuer-Baukomponente aus einem Funktionselement und einer zugeordneten Auswerte-Verarbeitungseinrichtung verbunden ist. Das Funktionselement ist beispielsweise ein Funk-Empfänger, eine Fingerprint-Schnittstelle, eine Eingabe-Tastatur für einen PIN-Code, ein Schloss oder ein Kartenlesegerät. Nachteilig ist, dass bei jeder Nutzung die Identifikation erneut durchgeführt werden muss.

Aus der US 2018/0194242 A1 ist ein Verfahren zur Authentifizierung bekannt, wobei ein mobiles Endgerät eine Kennung an eine Ladesäule übermittelt, wo diese mit abgelegten Kennungen in einer Berechtigungsliste (whitelist) verglichen wird, um bei positivem Ergebnis den Ladevorgang freizugeben.

Aus der US 2014/0074308 A1 oder der US 2012/0150360 A1 sind jeweils Verfahren zur Authentifizierung und Freigabe eines Ladevorgangs eines Elektro- oder Hybridfahrzeugs an einer Ladesäule bekannt, wobei das Elektro- oder Hybridfahrzeug über ein Ladekabel eine Kennung an die Ladesäule übermittelt, wobei die Ladesäule die Kennung empfängt und überprüft, ob für die Kennung eine Berechtigung zur Nutzung der Ladesäule in einer Liste der Ladesäule vorliegt, wobei bei Vorliegen der Berechtigung der Ladevorgang gestartet wird.

Ähnliche Verfahren sind aus der US 2016/0084672 A1, der DE 10 2009 033 051 A1, der JP 2009-165301 A1 und der US 2012/150360 A1 bekannt.

Aus der DE 10 2015 107 395 A1 ist ein Verfahren zur Authentifizierung und Freigabe eines Ladevorganges eines Elektro- oder Hybridfahrzeugs an einer Ladesäule bekannt, wobei das Elektro- oder Hybridfahrzeug eine Kennung an die Ladesäule übermittelt, wobei die Ladesäule die Kennung empfängt und überprüft, ob für die Kennung eine Berechtigung zur Nutzung der Ladesäule in einer Liste der Ladesäule vorliegt, wobei bei Vorliegen der Berechtigung der Ladevorgang gestartet wird. Zur erstmaligen Eintragung der Kennung in die Liste wird ein Betätigungselement und dann über andere Eingabemittel die Kennung eingegeben.

Aus der DE 10 2017 206 948 A1 ist ein Verfahren zur zweistufigen Autorisierung eines Ladevorganges an einer Ladesäule bekannt, wobei die Ladesäule zum Laden eines Fahrzeugs mittels eines Ladekabels ausgebildet ist, umfassend die Schritte:
- Empfang eines von einem mobilen Endgerät über eine Nahfeldkommunikationsverbindung gesendeten endgeräteseitigen Berechtigungsnachweis von einer der Ladesäule zugeordneten Steuerungsvorrichtung,
- Prüfung des endgeräteseitigen Berechtigungsnachweises seitens der Steuerungsvorrichtung und bei positivem Ergebnis der Prüfung Einrichtung einer ersten Autorisierung,
- Freigabe des Ladekabels aufgrund der ersten Autorisierung,
- Empfang eines fahrzeugseitigen Berechtigungsnachweises von der Steuerungsvorrichtung,
- Prüfung des fahrzeugseitigen Berechtigungsnachweises seitens der Steuerungsvorrichtung und bei positivem Ergebnis der Prüfung Einrichtung einer zweiten Autorisierung, und
- Freigabe des Ladevorgangs aufgrund der zweiten Autorisierung.

Aus der US 2014/074308 A1 ist ein Verfahren bekannt, wo eine Berechtigung zur Nutzung einer Ladesäule über ein Eingabemittel an der Ladesäule eingegeben werden kann, wobei bei positiver Überprüfung durch die Ladesäule das Fahrzeug zukünftig die Ladesäule zum Laden nutzen kann.

Aus der JP 2009 165 301 A ist ein Verfahren zur Authentifizierung und Freigabe eines Ladevorganges eines Elektro- oder Hybridfahrzeugs an einer Ladesäule bekannt, wobei das Elektro- oder Hybridfahrzeug über ein Ladekabel eine Kennung an die Ladesäule übermittelt, wobei die Ladesäule die Kennung empfängt und überprüft, ob für die Kennung eine Berechtigung zur Nutzung der Ladesäule in einer Liste der Ladesäule vorliegt, wobei bei Vorliegen der Berechtigung der Ladevorgang gestartet wird.

Der Erfindung liegt das technische Problem zugrunde, ein Verfahren zur Authentifizierung und Freigabe eines Ladevorganges eines Elektro- oder Hybridfahrzeugs an einer Ladesäule zur Verfügung zu stellen, das nutzerfreundlicher ist. Ein weiteres technisches Problem ist die Schaffung einer geeigneten Ladesäule sowie eines geeigneten Elektro- oder Hybridfahrzeugs.

Die Lösung des technischen Problems ergibt sich durch ein Verfahren mit den Merkmalen des Anspruchs 1, eine Ladesäule mit den Merkmalen des Anspruchs 5 sowie ein Elektro- oder Hybridfahrzeugs mit den Merkmalen des Anspruchs 6. Weitere vorteilhafte Ausgestaltungen der Erfindung ergeben sich aus den Unteransprüchen.

Bei dem Verfahren zur Authentifizierung und Freigabe eines Ladevorganges eines Elektro- oder Hybridfahrzeugs an einer Ladesäule wird eine Kennung von dem Elektro- oder Hybridfahrzeug über ein Ladekabel an die Ladesäule übermittelt, wobei die Ladesäule die Kennung empfängt und überprüft, ob für die Kennung eine Berechtigung zur Nutzung der Ladesäule in einer Liste (whitelist) in der Ladesäule vorliegt, wobei bei Vorliegen der Berechtigung der Ladevorgang gestartet wird. Dieses Verfahren weist eine Reihe von Vorteilen auf. Ein Vorteil ist, dass der Nutzer keine spezielle Interaktion (wie beispielsweise eine Betätigung eines Schlüssels oder Eingabe eines PIN-Codes) machen muss. Das Verfahren kann automatisiert zwischen Elektro- oder Hybridfahrzeug und Ladesäule ablaufen und wird beispielsweise durch Stecken des Ladekabels gestartet. Die Ladesäule benötigt keine Verbindung zu einem Backend und das Fahrzeug benötigt keine weiteren Schnittstellen zur Kommunikation mit der Ladesäule. Dabei kann die Kommunikation von dem Elektro- oder Hybridfahrzeug oder von der Ladesäule gestartet werden. Die Kennung ist dabei beispielsweise die eindeutige Fahrzeugkennung oder eine andere Kennung. Die Kommunikation kann dabei unverschlüsselt oder verschlüsselt erfolgen.

Für die erstmalige Eintragung der Kennung eines Fahrzeugs in die Liste gibt es nun verschiedene Möglichkeiten.

Erfindungsgemäß überträgt das Elektro- oder Hybridfahrzeug über das Ladekabel einen Freischalt-Code an die Ladesäule, wobei nach Bestätigung des Freischalt-Codes durch die Ladesäule das Elektro- oder Hybridfahrzeug eine Kennung an die Ladesäule überträgt, die dann von der Ladesäule empfangen und in der Liste abgespeichert wird.

Dabei sind in der Liste der berechtigten Kennungen mindestens einzelnen Kennungen Nutzungsbeschränkungen zugeordnet, beispielsweise wie oft oder wie lange diese die Ladesäule benutzen dürfen. Auch kann die entnehmbare elektrische Energie beschränkt sein.

In einer Ausführungsform wird mittels einer lokalen an der Ladesäule angeordneten Eingabeeinheit die Ladesäule freigeschaltet und eine Kennung eines mit einem Ladekabel an die Ladesäule angeschlossenen Elektro- oder Hybridfahrzeug an die Ladesäule übertragen und in der Liste der Ladesäule als zukünftig berechtigt abgespeichert. Die Eingabeeinheit ist beispielsweise ein Schloss, eine Eingabe-Tastatur oder ein Kartenlesegerät.

In einer weiteren alternativen oder ergänzenden Ausführungsform wird der Ladesäule eine Kennung eines Elektro- oder Hybridfahrzeugs von einem Backend übermittelt, wobei dann die Ladesäule die übermittelte Kennung in der Liste abspeichert. So kann beispielsweise der Besitzer der Ladesäule über einen Rechner oder ein Mobilfunk-Endgerät die Kennung an die Ladesäule vorab übertragen, sodass diese dann bereits in der Liste vorliegt, bevor das zu ladende Kraftfahrzeug an der Ladesäule erscheint.

In einer weiteren Ausführungsform wird durch Entfernen des Ladekabels aus dem Elektro- oder Hybridfahrzeug eine Freigabe der Energieübertragung der Ladesäule beendet, was mögliche Manipulationen verhindert.

Die Ladesäule umfasst ein Ladekabel oder eine Ladedose zur Aufnahme eines Ladekabels und einen Speicher mit einer Liste von Kennungen, die zur Nutzung der Ladesäule berechtigt sind, wobei die Ladesäule derart ausgebildet ist, über das Ladekabel eine Kennung zu empfangen und mit den Kennungen in der Liste zu vergleichen, wobei in Abhängigkeit des Vergleichs der Ladevorgang freigegeben wird oder nicht, wobei die Ladesäule weiter derart ausgebildet ist, einen Freischalt-Code zu empfangen, wobei nach Betätigung des Freischalt-Codes durch die Ladesäule eine danach empfangene Kennung eines Elektro- oder Hybridfahrzeugs in der Liste abgespeichert wird.

Das Elektro- oder Hybridfahrzeug umfasst eine Ladedose und einen Speicher mit einer Kennung, wobei das Elektro- oder Hybridfahrzeug derart ausgebildet ist, über ein in die Ladedose gestecktes Ladekabel eine Kennung zu übertragen, wobei das Elektro- oder Hybridfahrzeug weiter derart ausgebildet ist, einen Freischalt-Code über das gesteckte Ladekabel vor der Kennung zu übertragen.

Hinsichtlich möglicher weiterer Ausgestaltungen der Ladesäule und des Elektro- oder Hybridfahrzeugs wird auf die vorangegangenen Ausführungen Bezug genommen.

Die Erfindung wird nachfolgend anhand eines bevorzugten Ausführungsbeispiels näher erläutert. Die einzige Figur zeigt eine schematische Darstellung eines Elektrofahrzeugs an einer Ladesäule.

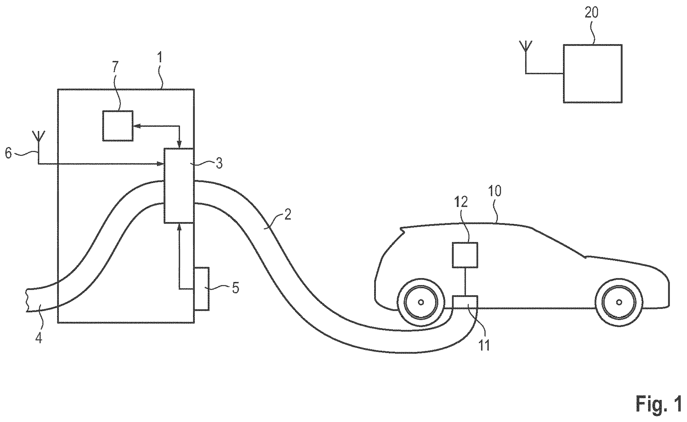

In der Fig. 1 ist eine Ladesäule 1 dargestellt. Die Ladesäule 1 weist ein Ladekabel 2 auf, das dazu ausgebildet ist, in eine Ladedose 11 eines Elektrofahrzeugs 10 gesteckt zu werden. Das Ladekabel 2 weist Leitungen zur Energieübertragung und Leitungen für die Kommunikation auf, die aus Übersichtsgründen nicht dargestellt sind. Die Ladesäule 1 weist weiter eine Steuereinheit 3 auf, die derart ausgebildet ist, einen Ladevorgang an der Ladesäule 1 freizugeben oder zu verhindern. Hierzu weist die Steuereinheit 3 beispielsweise nicht dargestellte Schaltelemente auf, mittels derer die Verbindung zwischen den Leitungen für die Energieübertragung des Ladekabels 2 mit den Leitungen 4 einer Spannungsversorgung hergestellt oder unterbrochen wird. Weiter weist die Ladesäule 1 eine Eingabeeinheit 5 und/oder eine Datenschnittstelle 6 zu einem Backend 20 auf. Schließlich weist die Ladesäule 1 einen Speicher 7 mit einer Liste von Kennungen auf, die eine Berechtigung zur Nutzung der Ladesäule 1 haben. Das Elektrofahrzeug 10 weist ebenfalls einen Speicher 12 auf, in dem eine Kennung für das Elektrofahrzeug 10 abgelegt ist. Dabei kann auch vorgesehen sein, dass das Ladekabel 1 nicht fest mit der Ladesäule 1 verbunden ist und das Ladekabel 1 für den Ladevorgang sowohl in die Ladesäule 1 als auch in das Elektrofahrzeug 10 eingesteckt werden muss.

Der Verfahrensablauf zur Authentifizierung und Freigabe eines Ladevorganges des Elektrofahrzeugs 10 an der Ladesäule 1 soll nun erläutert werden. Bei der Ladesäule 1 handelt es sich um eine nicht öffentliche Ladesäule 1. Im Ausgangszustand hat die Steuereinheit 3 die Verbindung der Schaltelemente geöffnet. Kommt nun das Elektrofahrzeug 10 zur Ladesäule 1, so steckt der Nutzer das Ladekabel 2 mit seinem Ladestecker in die Ladedose 11 des Elektrofahrzeugs 10. Das Elektrofahrzeug 10 überträgt daraufhin seine Kennung aus dem Speicher 12 über das Ladekabel 2 an die Steuereinheit 3, wobei die Übertragung über eine Kommunikationsleitung (z.B. Pilot) oder über eine Leitung zur Energieübertragung erfolgt. Die Steuereinheit 3 empfängt die Kennung und überprüft, ob die Kennung in der Liste im Speicher 7 ist. Ist dies der Fall, so werden die Schaltelemente geschlossen und der Ladevorgang freigegeben. Ist die Kennung hingegen nicht in der Liste, so bleiben die Schaltelemente offen.

Um nun die Kennung erstmalig in die Liste einzutragen, gibt es verschiedene Möglichkeiten. So kann beispielsweise der Nutzer über die Eingabeeinheit 5 einen PIN-Code eingeben oder mittels einer Karte oder eines Schlüssels den Ladevorgang freigeben, wobei dann die empfangene Kennung vom Elektrofahrzeug 10 von der Steuereinheit 3 in die Liste in dem Speicher 7 eingeschrieben wird. Alternativ kann das Elektrofahrzeug 10 einen Freischalt-Code vor Übertragung der Kennung an die Ladesäule über das Ladekabel übermitteln, woraufhin dann die Steuereinheit 3 ebenfalls die Kennung in der Liste einträgt. Schließlich kann auch ein Backend 20 die Kennung vorab an die Datenschnittstelle 6 übertragen.

### Bezugszeichenliste

- 1: Ladesäule
- 2: Ladekabel
- 3: Steuereinheit
- 4: Leitung
- 5: Eingabeeinheit
- 6: Datenschnittstelle
- 7: Speicher
- 10: Elektrofahrzeug
- 11: Ladedose
- 12: Speicher
- 20: Backend

## Patentansprüche

1. Verfahren zur Authentifizierung und Freigabe eines Ladevorganges eines Elektro- oder Hybridfahrzeugs (10) an einer Ladesäule (1), wobei das Elektro- oder Hybridfahrzeug (10) über ein Ladekabel (2) eine Kennung an die Ladesäule (1) übermittelt, wobei die Ladesäule (1) die Kennung empfängt und überprüft, ob für die Kennung eine Berechtigung zur Nutzung der Ladesäule (1) in einer Liste der Ladesäule (1) vorliegt, wobei bei Vorliegen der Berechtigung der Ladevorgang gestartet wird, **dadurch gekennzeichnet, dass** das Elektro- oder Hybridfahrzeug (10) für eine erstmalige Eintragung der Kennung des Elektro- oder Hybridfahrzeugs (10) in die Liste über das Ladekabel (2) einen Freischalt-Code an die Ladesäule (1) überträgt, wobei nach Bestätigung des Freischalt-Codes durch die Ladesäule (1) das Elektro- oder Hybridfahrzeug (10) eine Kennung an die Ladesäule (1) überträgt, die dann von der Ladesäule (1) empfangen und in der Liste abgespeichert wird, wobei in der Liste der berechtigten Kennungen mindestens einzelnen Kennungen Nutzungsbeschränkungen zugeordnet sind.

2. Verfahren nach Anspruch 1, **dadurch gekennzeichnet, dass** mittels einer lokal an der Ladesäule (1) angeordneten Eingabeeinheit die Ladesäule (1) freigeschaltet wird und eine Kennung eines mit einem Ladekabel (2) an die Ladesäule (1) angeschlossenen Elektro- oder Hybridfahrzeugs (10) an die Ladesäule (1) übertragen und in der Liste der Ladesäule (1) als zukünftige Berechtigung abgespeichert wird.

3. Verfahren nach einem der vorangegangenen Ansprüche, **dadurch gekennzeichnet, dass** der Ladesäule (1) eine Kennung eines Elektro- oder Hybridfahrzeugs (10) von einem Backend (20) übermittelt wird und die Ladesäule (1) die übermittelte Kennung in der Liste abspeichert.

4. Verfahren nach einem der vorangegangenen Ansprüche, **dadurch gekennzeichnet, dass** durch Entfernen des Ladekabels (2) aus dem Elektro- oder Hybridfahrzeug (10) eine Freigabe der Ladesäule (1) beendet wird.

5. Ladesäule (1), umfassend ein Ladekabel (2) oder eine Ladedose (11) zur Aufnahme eines Ladekabels (2) und einen Speicher (7) mit einer Liste von Kennungen, die zur Nutzung der Ladesäule (1) berechtigt sind, wobei die Ladesäule (1) derart ausgebildet ist, über das Ladekabel (2) eine Kennung zu empfangen und mit den Kennungen in der Liste zu vergleichen, wobei in Abhängigkeit des Vergleichs der Ladevorgang freigegeben wird oder nicht, die Ladesäule (1) **dadurch gekennzeichnet, dass** sie weiter derart ausgebildet ist, einen Freischalt-Code über das Ladekabel (2) zu empfangen, wobei nach Bestätigung des Freischalt-Codes durch die Ladesäule (1) eine danach empfangene Kennung eines Elektro- oder Hybridfahrzeugs in der Liste abgespeichert wird, wobei in der Liste der berechtigten Kennungen mindestens einzelnen Kennungen Nutzungsbeschränkungen zugeordnet sind.

6. Elektro- oder Hybridfahrzeug, umfassend eine Ladedose (11) und einem Speicher (12) mit einer Kennung, wobei das Elektro- oder Hybridfahrzeug (10) derart ausgebildet ist, über ein in die Ladedose (11) gestecktes Ladekabel (2) die Kennung an eine Ladesäule (1) zu übertragen, dadurch gekennzeichent, dass das Elektro- oder Hybridfahrzeug weiter derart ausgebildet ist, einen Freischalt-Code an die Ladesäule (1) über das gesteckte Ladekabel vor der Kennung zu übertragen, um die Kennung in einer Liste der Ladesäule (1) von Kennungen, die zur Nutzung der Ladesäule (1) berechtigt sind, einzutragen, wobei in der Liste der berechtigten Kennungen mindestens einzelnen Kennungen Nutzungsbeschränkungen zugeordnet sind.

## Claims

1. Method for authenticating and enabling a charging process of an electric or hybrid vehicle (10) at a charging station (1), the electric or hybrid vehicle (10) transmitting an identifier to the charging station (1) via a charging cable (2), the charging station (1) receiving the identifier and checking whether there is an authorization for the identifier to use the charging station (1) in a list of the charging station (1), the charging process being started if the authorization is present, **characterized in that** the electric or hybrid vehicle (10) transmits an activation code to the charging station (1) via the charging cable (2) for the first entry of the identifier of the electric or hybrid vehicle (10) in the list, the electric or hybrid vehicle (10) transmitting an identifier to the charging station (1) after confirmation of the activation code by the charging station (1), which identifier is then received by the charging station (1) and stored in the list, at least individual identifiers being assigned usage restrictions in the list of authorized identifiers.

2. Method according to claim 1, **characterized in that** the charging station (1) is activated by means of an input unit arranged locally on the charging station (1) and an identifier of an electric or hybrid vehicle (10) connected to the charging station (1) with a charging cable (2) is transmitted to the charging station (1) and stored in the list of the charging station (1) as future authorization.

3. Method according to either of the preceding claims, **characterized in that** an identifier of an electric or hybrid vehicle (10) is transmitted to the charging station (1) from a backend (20) and the charging station (1) stores the transmitted identifier in the list.

4. Method according to any of the preceding claims, **characterized in that** the enabling of the charging station (1) is terminated by virtue of the charging cable (2) being removed from the electric or hybrid vehicle (10).

5. Charging station (1), comprising a charging cable (2) or a charging socket (11) for receiving a charging cable (2) and a memory (7) having a list of identifiers that are authorized to use the charging station (1), the charging station (1) being designed to receive an identifier via the charging cable (2) and to compare it with the identifiers in the list, the charging process being enabled or not depending on the comparison, the charging station (1) **characterized in that** it is further designed to receive an activation code via the charging cable (2), a subsequently received identifier of an electric or hybrid vehicle being stored in the list after confirmation of the activation code by the charging station (1), at least individual identifiers being assigned usage restrictions in the list of authorized identifiers.

6. Electric or hybrid vehicle, comprising a charging socket (11) and a memory (12) having an identifier, the electric or hybrid vehicle (10) being designed to transmit the identifier to a charging station (1) via a charging cable (2) plugged into the charging socket (11), **characterized in that** the electric or hybrid vehicle is further designed to transmit an activation code to the charging station (1) via the plugged-in charging cable before transmitting the identifier in order to enter the identifier in a list of the charging station (1) of identifiers that are authorized to use the charging station (1), at least individual identifiers being assigned usage restrictions in the list of authorized identifiers.

## Revendications

1. Procédé d'authentification et de validation d'une opération de charge d'un véhicule électrique ou hybride (10) à une borne de charge (1), dans lequel le véhicule électrique ou hybride (10) transmet un identifiant à la borne de charge (1) par l'intermédiaire d'un câble de charge (2), dans lequel la borne de charge (1) reçoit l'identifiant et vérifie s'il existe pour l'identifiant une autorisation d'utilisation de la borne de charge (1) dans une liste de la borne de charge (1), dans lequel l'opération de charge est lancée si l'autorisation est présente, **caractérisé en ce que** le véhicule électrique ou hybride (10) transmet un code d'activation à la borne de charge (1) par l'intermédiaire du câble de charge (2) pour une première inscription de l'identifiant du véhicule électrique ou hybride (10) dans la liste, dans lequel le véhicule électrique ou hybride (10) transmet à la borne de charge (1), après confirmation du code d'activation par la borne de charge (1), un identifiant qui est alors reçu par la borne de charge (1) et mémorisé dans la liste, dans lequel des restrictions d'utilisation sont associées à au moins des identifiants individuels dans la liste des identifiants autorisés.

2. Procédé selon la revendication 1, **caractérisé en ce qu'**au moyen d'une unité d'entrée agencée localement sur la borne de charge (1), la borne de charge (1) est activée et un identifiant d'un véhicule électrique ou hybride (10) raccordé à la borne de charge (1) par un câble de charge (2) est transféré à la borne de charge (1) et mémorisé dans la liste de la borne de charge (1) comme autorisation future.

3. Procédé selon l'une des revendications précédentes,
**caractérisé en ce qu'**un identifiant d'un véhicule électrique ou hybride (10) est transmis à la borne de charge (1) par un serveur dorsal (20) et la borne de charge (1) mémorise l'identifiant transmis dans la liste.

4. Procédé selon l'une des revendications précédentes, **caractérisé en ce que** le retrait du câble de charge (2) du véhicule électrique ou hybride (10) met fin à une validation de la borne de charge (1).

5. Borne de charge (1), comprenant un câble de charge (2) ou une prise de charge (11) pour recevoir un câble de charge (2) et une mémoire (7) comportant une liste d'identifiants qui sont autorisés pour l'utilisation de la borne de charge (1), dans lequel la borne de charge (1) est conçue de manière à recevoir un identifiant par l'intermédiaire du câble de charge (2) et à le comparer avec les identifiants dans la liste, dans lequel l'opération de charge est validée ou non en fonction de la comparaison, la borne de charge (1) étant **caractérisée en ce qu'**elle est en outre conçue pour recevoir un code d'activation par l'intermédiaire du câble de charge (2), dans lequel un identifiant d'un véhicule électrique ou hybride reçu ensuite est mémorisé dans la liste après confirmation du code d'activation par la borne de charge (1), dans lequel des restrictions d'utilisation sont associées à au moins des identifiants individuels dans la liste des identifiants autorisés.

6. Véhicule électrique ou hybride, comprenant une prise de charge (11) et une mémoire (12) comportant un identifiant, dans lequel le véhicule électrique ou hybride (10) est conçu de manière à transférer l'identifiant à une borne de charge (1) par l'intermédiaire d'un câble de charge (2) branché dans la prise de charge (11), **caractérisé en ce que** le véhicule électrique ou hybride est en outre conçu de manière à transférer un code d'activation à la borne de charge (1) par l'intermédiaire du câble de charge branché avant l'identifiant, afin d'inscrire l'identifiant dans une liste d'identifiants de la borne de charge (1) qui sont autorisés pour l'utilisation de la borne de charge (1), dans lequel des restrictions d'utilisation sont associées à au moins des identifiants individuels dans la liste des identifiants autorisés.
